# EUROPEAN PATENT APPLICATION

(11) **EP 1 767 910 A2**
(43) Date of publication of application: **28.03.2007**
(21) Application number: 06019691.2
(22) Date of filing: 20.09.2006
(51) Int. Cl.: G01J 1/08, G01J 1/42

(54) **Light amount measuring apparatus and light amount measuring method**

(30) Priority: 27.09.2005 JP 2005279506
(71) Applicant: Yokogawa Electric Corporation, Tokyo 180-8750 (JP)
(72) Inventor: Araragi, Muneki, Musashino-shi Tokyo 180-8750 (JP); Tanaami, Takeo, Musashino-shi Tokyo 180-8750 (JP)
(74) Representative: Grünecker, Kinkeldey, Stockmair & Schwanhäusser Anwaltssozietät

(57) **Abstract**

A zero point adjustment is performed by generating no signal state of a CCD camera. A state in which stray light does not enter the CCD camera is ensured by a calibration shutter. An output signal of the CCD camera is transmitted to a light amount calculator, and a calibrating section executes a calibration for the light amount calculator by using an output signal value as a reference (zero point). Further, light outputted from a laser light source is attenuated by an optical attenuator and is made to be incident on the CCD camera. By switching an attenuating amount of the optical attenuator, correctly set light is made to be incident on the CCD camera. The output signal of the CCD camera is transmitted to the light amount calculator, and the calibrating section executes the calibration such that values of the respective output signals correctly correspond to respective light amounts.

## Description

This application claims foreign priority based on Japanese Patent application No. 2005-279506, filed September 27, 2005, the content of which is incorporated herein by reference in its entirety.

### BACKGROUND OF THE INVENTION

### 1. Field of the Invention

The present invention relates to a light amount measuring apparatus and a light amount measuring method for measuring a light amount, particularly relates to a light amount measuring apparatus and a light amount measuring method capable of quantitatively evaluating a light amount.

### 2. Description of the Related Art

As a method of identifying a biopolymer of DNA or the like, a method of using a micro array is known. For example, when DNA is identified, a DNA probe having a known base sequence is fixed to each site of a micro array, and DNA having a complementary base sequence is coupled to each site by hybridization. By marking the coupled DNA by a fluorescent marker, a coupling amount can be recognized as a light amount of fluorescence.

For example, refer to Journal "Optics", optical technology in life science "DNA analysis and optical technology", ToruMakino, KyoichiKarino, vol.28, No.10 (1999), An Affiliate of the Japan Society of Applied Physics, Optical Society of Japan, 1999, p549-552.

A light amount is measured by using a dedicated light amount measuring apparatus. However, according to an apparatus of a related art, an absolute light amount cannot be measured and therefore, a gene expression amount cannot directly be evaluated quantitatively.

### SUMMARY OF THE INVENTION

The present invention has been made in view of the above circumstances, and provides a light amount measuring apparatus and a light amount measuring method capable of quantitatively evaluating a light amount.

In some implementations, a light amount measuring apparatus of the invention comprising:
a light detector for receiving light;
a light amount calculating section for calculating a light amount of fluorescent signal light based on an output signal of the light detector;
a shutter for intercepting the light incident on the light detector; and
a calibrating section for performing calibration by using a value of the output signal when the light incident on the light detector is intercepted by the shutter, as a zero point of the light amount being calculated by the light amount calculating section.

In some implementations, a light amount measuring apparatus of the invention comprising:
a light detector for receiving light;
a light amount calculating section for calculating a light amount of fluorescent signal light based on an output signal of the light detector;
a calibration light source which controls a light amount of light to be a predetermined light amount, the light being provided to the light detector; and
a calibrating section for calibrating the light amount calculated by the light amount calculating section by providing the light having the predetermined light amount to the light detector by the calibration light source.

In the light amount measuring apparatus, the calibration light source includes:
a light source for outputting light having a constant light amount; and
an optical attenuator for attenuating the light from the light source so that the light has the predetermined light amount.

The light amount measuring apparatus further comprising:
an excitation light irradiating section for irradiating excitation light to an object that generates the fluorescent signal light.

In some implementations, a light amount measuring apparatus of the invention comprising:
a light detector for receiving light;
a light amount calculating section for calculating a light amount of fluorescent signal light based on an output signal of the light detector;
an excitation light irradiating section for irradiating excitation light;
a reference fluorescent signal generating object for generating a reference fluorescent signal by receiving the excitation light; and
a calibrating section for calibrating the light amount calculated by the light amount calculating section, by providing light having a predetermined light amount to the light detector by the reference fluorescent signal.

In some implementations, a light amount measuring method of the invention comprising:
calculating a light amount of fluorescent signal light based on an output signal of a light detector for receiving light;
intercepting the light incident on the light detector; and
performing calibration by using a value of the output signal when the light incident on the light detector is intercepted, as a zero point of the light amount being calculated.

In some implementations, a light amount measuring method of the invention comprising:
calculating a light amount of fluorescent signal light based on an output signal of a light detector for receiving light; and
calibrating the light amount being calculated by providing light having a predetermined light amount to the light detector by a calibration light source which controls a light amount of the light to be the predetermined light amount.

In the light amount measuring method, the calibration light source includes:
a light source for outputting light having a constant light amount; and
an optical attenuator for attenuating the light from the light source so that the light has the predetermined light amount.

In some implementations, a light amount measuring method of the invention comprising:
a light amount calculating section for calculating a light amount of fluorescent signal light based on an output signal of a light detector for receiving light;
irradiating excitation light to a reference fluorescent signal generating object for generating a reference fluorescent signal; and
calibrating the light amount being calculated, by providing light having a predetermined light amount to the light detector by the reference fluorescent signal.

According to the light amount measuring apparatus of the invention, calibration is performed by using a value of the output signal when the incidence of light is intercepted by the shutter, as a zero point of the light amount being calculated by the light amount calculating section. Therefore, for example, even the light amount at extremely small level close to that of the background art can accurately be evaluated quantitatively.

According to the light amount measuring apparatus of the invention, linearity of the light amount calculated by the light amount calculating section is calibrated by providing the light having the predetermined light amount to the light detector by the calibration light source. Therefore, the light amount can quantitatively be evaluated.

According to the light amount measuring apparatus of the invention, the light amount calculated by the light amount calculating section is calibrated by providing light having a predetermined light amount to the light detector without providing the calibration light source separately. Therefore, the light amount can quantitatively be evaluated.

According to the light amount measuring method of the invention, calibration is performed by using a value of the output signal when the incidence of light is intercepted as a zero point of the light amount. Therefore, for example, even the light amount at extremely small level close to that of the background light can be accurately evaluated quantitatively.

According to the light amount measuring method of the invention, linearity of the light amount calculated by the light amount calculating section is calibrated by providing the light having the predetermined light amount to the light detector by the calibration light source. Therefore, the light amount can quantitatively be evaluated.

According to the light amount measuring method of the invention, the light amount calculated by the light amount calculating section is calibrated by providing light having a predetermined light amount to the light detector without providing the calibration light source separately. Therefore, the light amount can quantitatively be evaluated.

### BRIEF DESCRIPTION OF THE DRAWINGS

Fig.1 is a diagram showing a configuration of an optical system of a light amount measuring apparatus according to an embodiment of the invention.
Fig.2 is a block diagram showing a configuration of a control system of the light amount measuring apparatus according to an embodiment of the invention.

### DESCRIPTION OF THE PRFERRED EMBODIMENTS

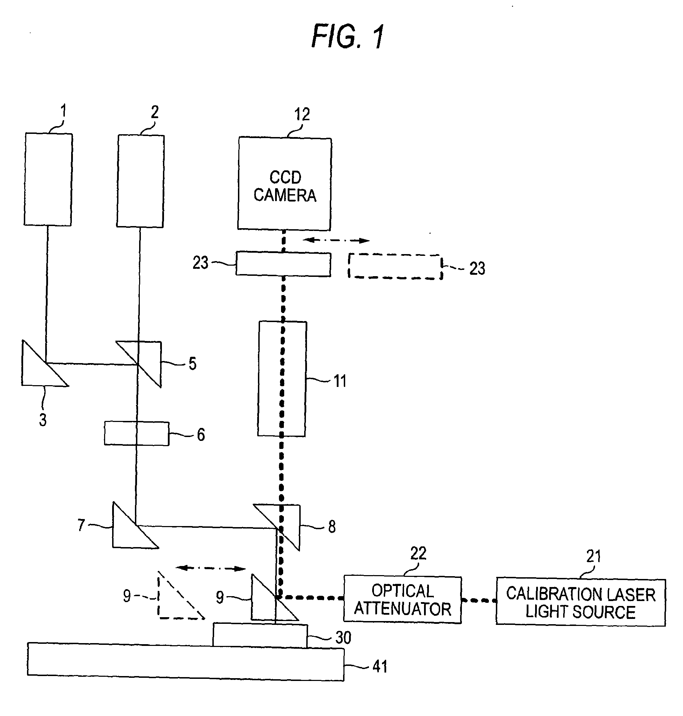

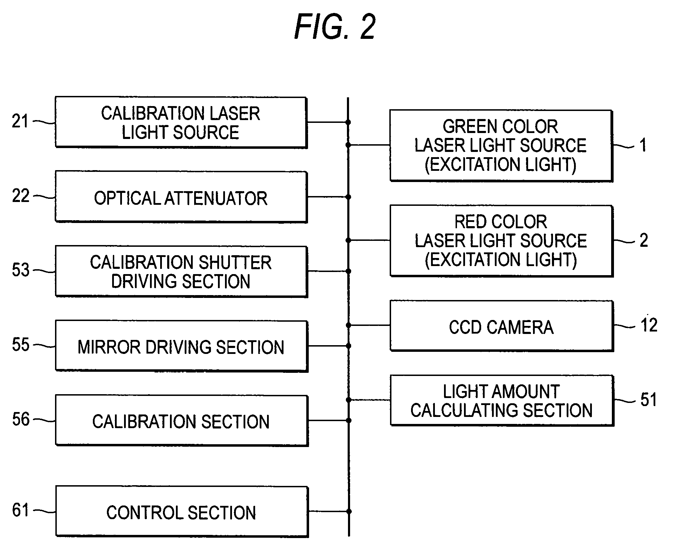

An embodiment of a light amount measuring apparatus according to the invention will be explained in reference to Fig.1 and Fig.2 as follows.

Fig.1 is a view showing a configuration of an optical system of a light amount measuring apparatus according to the embodiment. The embodiment is a light amount measuring apparatus for measuring a light amount of fluorescent signal light generated at a DNA micro array by irradiating excitation light to the DNA micro array (DNA or RNA sample on micro array (hereinafter, referred to as biochip)).

As shown by Fig.1, the light amount measuring apparatus of the embodiment includes a green color laser light source 1 and a red color laser light source 2 for generating excitation light, a mirror 3 for bending irradiated light from the green color laser light source 1, and a dichroic mirror 5, a micro lens array 6, a mirror 7, a dichroic mirror 8 and a movable mirror 9 respectively arranged at an optical path of irradiated light from the green color laser light source 1 and the red color laser light source 2 as an optical system for irradiating excitation light to the DNA micro array (biochip) 30.

Wavelengths of the green color laser light source 1 and the red color laser light source 2 coincide with that of excitation light of fluorescent colorants such as cy3 and cy5.

Further, the light amount measuring apparatus of the embodiment includes a relay lens 11 arranged at an optical path of signal light, and a highly sensitive CCD (Charge Coupled Device) camera 12 for receiving light passed through the relay lens 11, as an optical system for receiving fluorescent signal light generated at the DNA micro array 30.

Further, the light amount measuring apparatus of the embodiment includes a calibration laser light source 21 for outputting laser light for calibration and an optical attenuator 22 for attenuating laser light outputted from the calibration laser light source 21, as an optical system for calibrating a light amount. Further, the calibration laser light source 21 and the optical attenuator 22 may be attached when performing calibration, instead of being incorporated in the apparatus.

Further, a calibration shutter 23 for intercepting light incident on the CCD camera 12 is provided on a front side of the CCD camera 12.

As shown by Fig. 1, the DNA micro array 30 is mounted on a table 41.

Fig.2 is a block diagram showing a configuration of a control system of the light amount measuring apparatus of the embodiment.

As shown by Fig.2, the light amount measuring apparatus of the embodiment includes a light amount calculating section 51 for calculating a light amount of light caught by the CCD camera 12, a calibration shutter driving section 53 for driving the calibration shutter 23, a mirror driving section 55 for driving the mirror 9, a calibrating section 56 for calibrating the light amount calculating section 51, and a control section 61 for controlling the green color laser light source 1, the red color laser light source 2, the CCD camera 12, the light amount calculating section 51, the calibration laser light source 21, the optical attenuator 22, the calibration shutter driving section 53, the mirror driving section 55 and the calibrating section 56.

Next, an operation when measuring the DNA micro array 30 will be explained.

In measuring, the movable mirror 9 and the calibration shutter 23 are driven to positions indicated by broken lines respectively avoiding the optical paths (Fig.1).

Laser light outputted from the green color laser light source 1 or the red color laser light source 2 is irradiated to the DNA micro array 30 via the mirror 3, the dichroic mirror 5, the microlens array 6, the mirror 7, and the dichroic mirror 8.

Fluorescent signal light from the DNA micro array 30, generated by excitation by laser light, is made to be incident on the CCD camera 12 via the dichroic mirror 8 and the relay lens 11. An output signal of the CCD camera 12 is transmitted to the light amount calculating section 51, and at the light amount calculating section 51, a light amount of signal light is calculated.

Further, with regard to signal light at a low level that can be buried in background noise, random noise may relatively reduced by an averaging processing by iterative addition to thereby increase an S/N ratio.

Generally, a gene expression amount is distributed in a wide range and therefore, in order to quantitatively measure the gene expression amount, it is requested to calculate the light amount to a low level highly accurately. However, the light amount at the low level is liable to be buried in the background noise, and in a light amount at a particularly low level, calculation accuracy becomes a problem.

Next, an operation in calibration will be explained.

According to the embodiment, a zero point adjustment is performed by producing a no signal state of the CCD camera 12. At this occasion, the calibration shutter 23 is driven to a position indicated by a bold line that intercepts the optical path (Fig.1). Thereby, a state in which stray light is not brought into the CCD camera 12 is ensured. An output signal of the CCD camera 12 at this occasion is transmitted to the light amount calculating section 51, and the calibrating section 56 executes a calibration with a value of the output signal as a reference (zero point) for the light amount calculating section 51.

Further, according to the embodiment, by controlling a light amount incident on the CCD camera 12, calibration of a light amount particularly in a low light amount region is performed. At this occasion, the calibration shutter 23 is driven to the position indicated by the broken line that avoids the optical path. Further, the movable mirror 9 is driven to the position indicated by the bold line that enters the optical path (Fig.1).

As shown by Fig.1, light outputted from the calibration laser light source 21 is attenuated by the optical attenuator 22 and is made to be incident on the CCD camera 12 via the movable mirror 9 and the relay lens 11. A light amount of laser light outputted from the calibration laser light source 21 and an attenuating amount by the optical attenuator 22 has already been known and therefore, also the light amount incident on the CCD camera 12 has already been known. Further, laser light outputted from the calibration laser light source 21 has a wavelength close to, for example, a wavelength (570nm) of fluorescent signal light of cy3.

By switching the attenuating amount of the optical attenuator 22, the light of which light amount is correctly set as, for example, 0dBm, -10dBm, -20dBm and the like are made to be incident on the CCD camera 12. Output signals of the CCD camera 12 at this occasion are transmitted to the light amount calculating section 51, and the calibrating section 56 executes calibration with respect to the light amount calculating section 51 such that the respective output signal values correctly correspond to the respective light amounts.

In this way, according to the embodiment, calibration of zero point is performed by using the calibration shutter 23, and a linearity of a light amount of particularly low level can be corrected by switching the attenuating amount of the optical attenuator 22. Therefore, the light amount can quantitatively measured accurately up to low level which is close to that of background light. Further, a light amount of background light can correctly be evaluated.

Although according to the embodiment, light having a known light amount is provided to the CCD camera 12 by using the calibration laser light source 21 and the optical attenuator 22, a light source capable of adjusting the light amount may be used in place thereof. For example, LED (Light Emitting Diode) may be used as the light source and the light amount may be controlled by a driving current.

Further, as a calibration light source, a white color light source may be used in place of the laser light source.

Further, instead of a combination of the calibration light source and the optical attenuator, an object (reference fluorescent signal generating object) for generating a fluorescent signal as a reference may be installed in place of the biochip 30, excitation light may be irradiated thereto from the green color laser light source or the red color laser light source (excitation light irradiating section) to be used as a calibration light source. Further, by preparing a plurality of objects for generating different reference fluorescent signals, the linearity calibration can be performed.

Although according to the embodiment, the light amount is calibrated by accurately controlling the light amount of light incident on the CCD camera 12, the light amount incident on the CCD camera 12 may accurately be measured. For example, by attaching a power meter capable of accurately measuring the light amount to the position of the CCD camera 12, the light amount actually incident on the CCD camera 12 can accurately be measured, and calibrated by matching the output signal of the CCD camera 12 under the same condition and the previously measured light amount. As the calibrating method using the power meter, a method disclosed in JP-A-2004-191232 can be applied to the present invention.

Although according to the embodiment, the calibrating section used for calibration is provided to the apparatus, by attaching the calibrating section for calibration when calibration is performed, a similar calibrating method may be executed. Here, the calibrating section includes the calibration light source 21, the optical attenuator 22 and the calibration shutter 23.

Although according to the embodiment, the case where the measuring object is the DNA micro array has been exemplified, the invention is similarly applicable to detection of various biological substances such as protein, sugar chain and metabolome. Further, the invention is not limited to detection of the substance by the micro array, but applicable also to evaluation of fluorescent dust in a semiconductor process, fluorescent face of a plasma display panel or the like.

The range of applying the invention is not limited to the embodiment. The invention is widely applicable to a light amount measuring apparatus and a light amount measuring method for calculating a light amount of fluorescent signal light based on an output signal of light detector.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. A light amount measuring apparatus comprising:
a light detector for receiving light;
a light amount calculating section for calculating a light amount of fluorescent signal light based on an output signal of the light detector;
a shutter for intercepting the light incident on the light detector; and
a calibrating section for performing calibration by using a value of the output signal when the light incident on the light detector is intercepted by the shutter, as a zero point of the light amount being calculated by the light amount calculating section.

2. A light amount measuring apparatus comprising:
a light detector for receiving light;
a light amount calculating section for calculating a light amount of fluorescent signal light based on an output signal of the light detector;
a calibration light source which controls a light amount of light to be a predetermined light amount, the light being provided to the light detector; and
a calibrating section for calibrating the light amount calculated by the light amount calculating section by providing the light having the predetermined light amount to the light detector by the calibration light source.

3. The light amount measuring apparatus according to claim 2, wherein the calibration light source includes:
a light source for outputting light having a constant light amount; and
an optical attenuator for attenuating the light from the light source so that the light has the predetermined light amount.

4. The light amount measuring apparatus according to claim 1, further comprising:
an excitation light irradiating section for irradiating excitation light to an object that generates the fluorescent signal light.

5. The light amount measuring apparatus according to claim 2, further comprising:
an excitation light irradiating section for irradiating excitation light to an object that generates the fluorescent signal light.

6. A light amount measuring apparatus comprising:
a light detector for receiving light;
a light amount calculating section for calculating a light amount of fluorescent signal light based on an output signal of the light detector;
an excitation light irradiating section for irradiating excitation light;
a reference fluorescent signal generating object for generating a reference fluorescent signal by receiving the excitation light; and
a calibrating section for calibrating the light amount calculated by the light amount calculating section, by providing light having a predetermined light amount to the light detector by the reference fluorescent signal.

7. A light amount measuring method comprising:
calculating a light amount of fluorescent signal light based on an output signal of a light detector for receiving light;
intercepting the light incident on the light detector; and
performing calibration by using a value of the output signal when the light incident on the light detector is intercepted, as a zero point of the light amount being calculated.

8. A light amount measuring method comprising:
calculating a light amount of fluorescent signal light based on an output signal of a light detector for receiving light; and
calibrating the light amount being calculated by providing light having a predetermined light amount to the light detector by a calibration light source which controls a light amount of the light to be the predetermined light amount.

9. The light amount measuring method according to claim 8, wherein the calibration light source includes:
a light source for outputting light having a constant light amount; and
an optical attenuator for attenuating the light from the light source so that the light has the predetermined light amount.

10. A light amount measuring method comprising:
a light amount calculating section for calculating a light amount of fluorescent signal light based on an output signal of a light detector for receiving light;
irradiating excitation light to a reference fluorescent signal generating object for generating a reference fluorescent signal; and
calibrating the light amount being calculated, by providing light having a predetermined light amount to the light detector by the reference fluorescent signal.
